(19) Europäisches Patentamt
European Patent Office
Office européen des brevets

(11) Veröffentlichungsnummer: **0 043 919**
A2

(12) # EUROPÄISCHE PATENTANMELDUNG

(21) Anmeldenummer: 81104545.9

(22) Anmeldetag: 12.06.81

(51) Int. Cl.³: C 22 B 3/00

(30) Priorität: 08.07.80 DE 3025740

(43) Veröffentlichungstag der Anmeldung: 20.01.82 Patentblatt 82/3

(84) Benannte Vertragsstaaten: BE GB NL SE

(71) Anmelder: Fried. Krupp Gesellschaft mit beschränkter Haftung
Altendorfer Strasse 103
D-4300 Essen 1(DE)

(72) Erfinder: Schulze, Reinhold, Dr.
Friedrich-Ebert-Strasse 84
D-4300 Essen(DE)

(54) **Verfahren zur Metallgewinnung aus komplexen Erzen und sekundären Vorstoffen.**

(57) Bei Verfahren zur Metallgewinnung aus Rohstoffen wie einfachen und komplexen sulfidischen Konzentraten, Kupfereisen und Kupferbleisteinen, Nickel-Kobalt-Speisen, metallischen Schrotten, Galvanikschlämmen, oxidischen Nickelerzen, Pyritabbränden, Flugstäuben, Räumaschen von Retortenöfen werden die zu verarbeitenden Ausgangsstoffe zur Auslaugung sowie zur selektiven Gewinnung der Metalle in mindestens einer Stufe extrahiert.

Zur Vermeidung aufwendiger Verfahren, von denen ggf. mehrere hintereinandergeschaltet werden müssen, wird vorgeschlagen, die Ausgangsstoffe in wäßriger Suspension einer Solventextraktion zuzuführen und anschließend die Metalle in einem Reextraktionsprozeß selektiv zu gewinnen.

EP 0 043 919 A2

0043919



FRIED. KRUPP GESELLSCHAFT MIT
BESCHRÄNKTER HAFTUNG in Essen

# Verfahren zur Metallgewinnung aus komplexen Erzen und sekundären Vorstoffen

Die Erfindung betrifft ein Verfahren zur Metallgewinnung aus komplexen Erzen und sekundären Vorstoffen. Darunter werden Verbindungen verstanden, die mehrere Nichteisenmetalle als Hauptbestandteile in außergewöhnlichen Konzentrations- und Bindungsverhältnissen enthalten. Insbesondere sollen Rohstoffe wie einfache und komplexe sulfidische Konzentrate, Kupfereisen- und Kupferbleisteine, Nickel-Kobalt-Speisen, metallische Schrotte, Galvanikschlämme, oxidische Nickelerze, Pyritabbrände, Flugstäube, Räumaschen von Retortenöfen darunter verstanden werden. Die zu verarbeitenden Ausgangsstoffe werden zur Auslaugung sowie zur selektiven Gewinnung der Metalle in mindestens einer Stufe extrahiert.

Die Verarbeitung komplexer Erze und sekundärer Vorstoffe, die mehrere NE-Metalle als Hauptbestandteile enthalten, ist bei Anwendung konventioneller metallurgischer Verfahren schwierig und führt in der Regel über mehrere Verfahrensstufen zu einer Reihe von Zwischenprodukten. Die Aufarbeitung der Zwischenprodukte erzeugt oft neue Zwischenprodukte mit der Folge, daß sich in diesen Fällen die Wertinhalte der eingesetzten Rohstoffe auf verschiedene Produkte verteilen und nur mit Hilfe aufwendiger Stoffkreisläufe ausgebracht werden können. Von den bekanntgewordenen pyro- und hydrometallurgischen Verfahrensvorschlägen zur Lösung dieser Probleme lassen sich in der Praxis jedoch nur komplexe Rohstoffe mit lediglich zwei von den wichtigsten Metallen Blei, Zink, Zinn, Kupfer, Kobalt und Nickel als Hauptbestandteile neben eng begrenzten Gehalten der anderen Metalle als Nebenbestandteile verarbeiten.

Pyrometallurgische Beispiele sind der Imperial-Smelting-Prozeß für Zn-Pb-Konzentrate und der Kivcet-Prozeß, der in zwei Versionen entweder für Cu-Zn- oder für Pb-Zn-Konzentrate ausgelegt ist.

Die Mehrheit der vorgeschlagenen hydrometallurgischen Verfahren kann ebenfalls nur Rohstoffe mit einem oder zwei Metallen als Hauptbestandteilen befriedigend verarbeiten. Dieser prinzipielle Nachteil hydrometallurgischer Verfahren ist darauf zurückzuführen, daß nur durch weitgehenden chemischen Aufschluß der Rohstoffe die gebundenen Wertinhalte freigesetzt werden können und aus den Aufschlußlösungen die wertlosen Bestandteile wieder ausgefällt werden müssen.

Im übrigen ist der Fachwelt bekannt, daß die Erzeugung und die Abtrennung der vorwiegend eisenhaltigen Schlämme im allgemeinen einen hohen Chemikalienverbrauch neben einem hohen verfahrenstechnischen Aufwand bedingt,

insbesondere dann, wenn ungelöste Edelmetalle und Blei in schwerlöslicher Sulfat- oder Chloridform als Hauptbestandteile eigene Fest-Flüssig-Trennung verlangen, um nicht verlorenzugehen. Abgesehen davon stellen Bleisulfat und -chlorid metallurgisch schwierige und deshalb unerwünschte Zwischenprodukte dar. Darüber hinaus ist bekannt, daß sich bei hydrometallurgischen Verfahren mit Solventextraktionen weitere verfahrenstechnische und erlösmindernde Belastungen durch die ständige Chemikalienzufuhr ergeben, die zur Neutralisierung der freiwerdenden Säuren bzw. Basen erforderlich ist. Schließlich verlangen die Ladekapazität der organischen Phase und die Selektivität des Extraktionsprozesses eine genaue Einhaltung des pH-Wertes.

Der Erfindung liegt die Aufgabe zugrunde, ein Verfahren anzugeben, das die vorgenannten Nachteile vermeidet und womit eine möglichst große Anzahl der in komplexen Verbindungen gebundenen Metalle ohne großen verfahrenstechnischen Aufwand selektiv ausgebracht werden kann.

Überraschenderweise wird die Aufgabe dadurch gelöst, daß die Ausgangsstoffe in wäßriger Suspension einer Solventextraktion zugeführt und anschließend die Metalle in einem Reextraktionsprozeß selektiv gewonnen werden. Es ist also entgegen der bisherigen Auffassung nicht erforderlich, die zu extrahierenden Stoffe

vor der Solventextraktion in Lösung zu bringen. Es genügt sogar, als Suspensionsmedium reines Wasser - ohne Zusätze von Salzen der zu extrahierenden Stoffe zu verwenden.

Vorteilhafterweise werden die Ausgangsstoffe in oxidischer oder carbonatischer Bindungsform in die wäßrige Suspension gebracht. Rohstoffe, die nicht in oxidischer oder carbonatischer Form vorliegen, lassen sich durch bekannte Verfahren wie Erhitzen, Verblasen, Abrösten oder dergleichen leicht in eine Oxidform überführen. Um den in geringen Ausmaß noch auftretenden Übergang der suspendierten Partikel in die organische Phase völlig zu verhindern, werden den wäßrigen Suspensionen geringe Mengen handelsüblicher Netzmittel zugesetzt. Gleichermaßen werden diese Netzmittel verwendet, falls feste Reextraktionsprodukte in den wäßrigen Reextraktionslösungen enthalten sind. Es versteht sich dabei von selbst, daß bei Kationenextraktionen anionische und bei Anionenextraktionen kationische Netzmittel zu verwenden sind. Vorteilhafterweise werden die wäßrigen Feststoffsuspensionen der Solventextraktion mit nur einem oder auch mit mehreren der Extraktionsmittel für Metalle, wie Phosphorsäureester, Hydroxyoxime, Hydroxychinoline, Amine, Sulfonsäuren oder Carbonsäuren, unterworfen. Die Extraktionsgeschwindigkeit kann durch Temperaturerhöhung beträchtlich gesteigert werden, wobei jedoch eine obere Grenze mit dem Siedepunkt der wäßrigen Phase gegeben ist und entsprechend geeignete Lösungsmittel mit hohen Flammpunkten für die organischen Phasen verwendet werden müssen. Als Beispiele seien hier höher siedende Erdölfraktionen und Alkohole wie

Isodecanol, Isotridecanol und Isooctadecanol genannt.

Eine vorteilhafte beschleunigte Phasentrennung wird durch Zusätze von Hilfsmitteln zur organischen Phase erreicht. Als geeignete Stoffe bieten sich Nonylphenol, Tributylphosphat, Isooctanol, Isononanol und Isodecanol an. Die Zusätze erübrigen sich natürlich dann, falls die genannten Stoffe schon als Lösungsmittel im Prozeß vorliegen.

Nach einer weiteren Ausbildung der Erfindung wird die Extraktion mehrstufig im Gegenstrom zwischen organischer Phase und wäßriger Suspension durchgeführt, wobei sich in der letzten Stufe der organischen Phase die leichter extrahierbaren und in der letzten Stufe der Suspensionen die schwerer extrahierbaren Metalle angereichert wiederfinden. Ferner wird die selektive Reextraktion der Metalle durch wäßrige Suspensionen von Verbindungen solcher Stoffe durchgeführt, die größere Affinität zur organischen Phase als die jeweils selektiv zu reextrahierenden Metalle haben. Schwer extrahierbare Metalle lassen sich somit leicht aus der organischen Phase verdrängen.

Als Agenzien für die stufenweise pH-wertabhängige Reextraktion von Kationen werden vorteilhafterweise $CO_2$, $SO_2$ und Mineralsäuren verwendet. Die Reextraktionslösungen werden dabei durch Begasen mit $CO_2$ und $SO_2$ während der Reextraktion ständig regeneriert.

Für den Ablauf der Reaktion läßt sich am Beispiel eines zweiwertigen Metalls Me aus der Extraktionstheorie ein Mechanismus ableiten, demzufolge die aufgrund des Verteilungsgesetzes in der wäßrigen Phase (A) stets vorhandenen Extraktionsmittel RH die Feststoffe MeX aufschließen und die entstandenen Metallverbindungen $MeR_2$ entsprechend ihrem Verteilungsgleichgewicht in die organische Phase (O) übergehen.

$$MeX_{(A)} + 2RH_{(A)} \rightarrow MeR_{2(O)} + H_2X_{(A)}$$

$H_2X$ bedeutet bei Oxiden (X= Sauerstoff) Wasser und bei Karbonaten (X = Karbonatanion) Kohlensäure, die unter Zersetzung als Kohlendioxid aus den wäßrigen Suspensionen entweicht.

Das geschilderte Verfahren ist frei von hohem Chemikalienverbrauch und den verfahrenstechnischen Belastungen, die sich durch Auflösung und Wiederausfällung unerwünschter Bestandteile bei den üblichen Solventextraktionsverfahren ergeben. Weiterhin entfällt beim neuen Verfahren das oft mühselige Auswaschen der Laugungsrückstände, das sonst notwendig ist, um die gelösten Wertbestandteile zurückzugewinnen und um deponiefähige Endprodukte zu erhalten.

Sofern Blei aus Sulfatschlämmen extrahiert werden soll, wird sulfatbindender Kalk zur wäßrigen Suspension gegeben.

Ein Ausführungsbeispiel der Erfindung ist in der Zeichnung dargestellt, die in schematischer Form die Verarbeitung komplexer Nichteisenmetall-Rohstoffe zeigt. Als vorzubehandelnde Rohstoffe können im einzelnen sulfidische Konzentrate, Kupfer-, Blei-, Eisensteine, Nickel-Kobalt-Speisen, Schrotte, Galvanikschlämme sowie oxidische Nickelerze dem erfindungsgemäßen Verfahren unterworfen werden. Die Vorbehandlung besteht aus bekannten Verfahrensschritten, wie Erhitzen, Verblasen, Abrösten usw.. Auf der anderen Seite lassen sich auch oxidische und karbonatische Zinkerze, Räumaschen, Flugstäube und Pyritabbrände, d.h. Stoffe, die in oxidischer und karbonatischer Form vorliegen, verwenden. Die Metalloxide bzw. - Karbonate von Kupfer , Blei, Zink, Kadmium, Kobalt, Nickel, Silber,Arsen, Antimon und Eisen sowie ggf. vorhandener Gangart werden in Wasser, das 0.1 g/l anionisches Netzmittel enthält, suspendiert und bei 370 K durch eine Lösung aus 20 Vol.-% Di-2-Äthylhexylphosphat und 10 Vol.-% Nonylphenol in Isotridecanol unter starkem Rühren einer Solventextraktion unterworfen. Die Nichteisenmetalle gehen praktisch vollständig in die organische Phase über, während Eisen, Arsen und Antimon im wäßrigen Suspensionsrückstand verbleiben. Die Aufarbeitung der organischen Phase erfolgt stufenweise.

In der ersten Reextraktion können durch Behandeln mit einer wäßrigen Ammoniumkarbonatlösung, die 0.1 g/l anionisches Netzmittel enthält, unter Einleiten von $CO_2$ und $SO_2$ das Blei quantitativ als Karbonat ausgefällt sowie Kobalt, Nickel und Silber als Amminlösungen reextrahiert werden. Silber kann auf mehrere Arten durch

Fällung, Zementation oder elektrolytisch von Kobalt und Nickel abgetrennt werden, was nach dem Stand der Technik ebenso bekannt ist wie die Gewinnung von Kobalt und Nickel aus ammoniakalischen Lösungen. Die in der organischen Phase verbleibenden Metalle, wie Kupfer und Kadmium, werden einer zweiten Reextraktionsstufe zugeführt, wo die beiden Metalle Kupfer und Kadmium durch weiteres Einleiten von $SO_2$ reextrahiert und anschließend nach der in Zinkhütten üblichen Zementation des Kadmiums getrennt. Das in der organischen Phase verbleibende Zink wird schließlich in der dritten Reextraktionsstufe mit Mineralsäuren reextrahiert, wonach es sich elektrolytisch als Metall ausbringen läßt.

## Ansprüche:

1. Verfahren zur Metallgewinnung aus Rohstoffen wie einfachen und komplexen sulfidischen Konzentraten, Kupfereisen- und Kupferbleisteinen, Nickel-Kobalt-Speisen, metallischen Schrotten, Galvanikschlämmen, oxidischen Nickelerzen, Pyritabbränden, Flugstäuben, Räumaschen von Retortenöfen, wobei die zu verarbeitenden Ausgangsstoffe zur Auslaugung sowie zur selektiven Gewinnung der Metalle in mindestens einer Stufe extrahiert werden, dadurch gekennzeichnet, daß die Ausgangsstoffe in wäßriger Suspension einer Solventextraktion zugeführt und anschließend die Metalle in einem Reextraktionsprozeß selektiv gewonnen werden.

2. Verfahren nach Anspruch 1, dadurch gekennzeichnet, daß die Ausgangsstoffe in oxidischer oder karbonatischer Bindungsform, wohin sie ggf. durch Erhitzen, Verblasen, Abrösten oder andere nach dem Stand der Technik bekannte Verfahren überführt werden, in die wäßrige Suspension gebracht werden.

3. Verfahren nach Ansprüchen 1 bis 2, dadurch gekennzeichnet, daß der wäßrigen Suspension und der Reextraktionslösung Netzmittel zugegeben werden.

4. Verfahren nach Ansprüchen 1 bis 3, dadurch gekennzeichnet, daß die Solventextraktion mit organischen Lösungen der für Metalle bekannten Extraktionsmittel,

wie beispielsweise Phosphorsäureester, Hydroxyoxime, Hydroxychinoline, Amine, Sulfonsäuren oder Carbonsäuren, durchgeführt wird.

5. Verfahren nach Ansprüchen 1 bis 4, dadurch gekennzeichnet, daß die Extraktionsmittel in schwerflüchtigen Lösungsmitteln mit hohem Flammpunkt, wie beispielsweise Isodecanol, Isotridecanol und Isooctadecanol, gelöst werden und Solvent- und Reextraktion bei Temperaturen bis zum Siedepunkt der wäßrigen Phase durchgeführt werden.

6. Verfahren nach Ansprüchen 1 bis 5, dadurch gekennzeichnet, daß die organischen Phasen einen oder mehrere Beschleuniger zur Phasentrennung wie Nonylphenol, Tributylphosphat, Isooctanol, Isononanol und Isodecanol enthalten.

7. Verfahren nach Ansprüchen 1 bis 6, dadurch gekennzeichnet, daß die Solventextraktion mehrstufig im Gegenstrom zwischen organischer Phase und wäßriger Rohstoffsuspension durchgeführt wird.

8. Verfahren nach Ansprüchen 1 bis 7, dadurch gekennzeichnet, daß die selektive Reextraktion der Metalle durch wäßrige Suspensionen von Verbindungen solcher Stoffe erfolgt, die größere Affinität zur organischen Phase als die jeweils selektiv zu reextrahierenden Metalle haben.

9. Verfahren nach Ansprüchen 1 bis 8, dadurch gekennzeichnet, daß die Reextraktion mit wäßrigen Lösungen der Kohlensäure und der schwefligen Säure und/oder den primären und/oder den sekundären Salzen der genannten Säuren erfolgt.

10. Verfahren nach Anspruch 9, dadurch gekennzeichnet, daß die Reextraktionslösungen durch Begasen mit $CO_2$ bzw. $SO_2$ während der Reextrakton regeneriert werden.

11. Verfahren nach Ansprüchen 1 bis 10, dadurch gekennzeichnet, daß sulfatbindender Kalk zur wäßrigen Suspension gegeben wird, sofern Blei aus Sulfatschlämmen extrahiert werden soll.

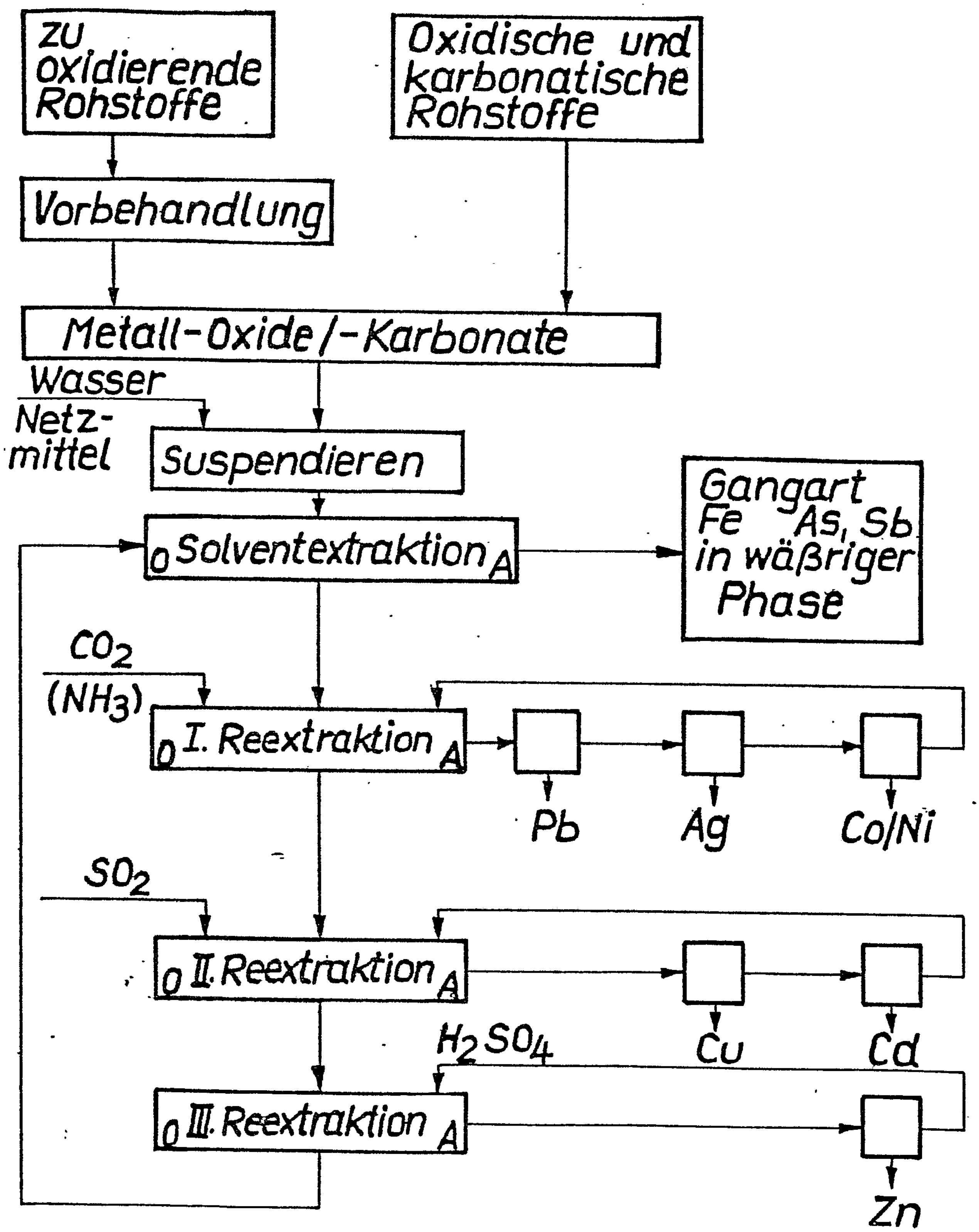
zu oxidierende Rohstoffe
Oxidische und karbonatische Rohstoffe
Vorbehandlung
Metall-Oxide/-Karbonate
Wasser
Netz-mittel
Suspendieren
O Solventextraktion A
Gangart Fe As, Sb in wäßriger Phase
$CO_2$
($NH_3$)
O I. Reextraktion A
Pb
Ag
Co/Ni
$SO_2$
O II. Reextraktion A
Cu
Cd
$H_2SO_4$
O III. Reextraktion A
Zn